# EUROPEAN PATENT APPLICATION

(11) **EP 2 741 070 A1**
(43) Date of publication of application: **11.06.2014**
(21) Application number: 12008096.5
(22) Date of filing: 04.12.2012
(51) Int. Cl.: G01M 9/04

(54) **Impact testing device, wind tunnel apparatus and testing method**

(71) Applicant: EADS Deutschland GmbH, 85521 Ottobrunn (DE); Brno University of Technology, 616 69 Brno (CZ)
(72) Inventor: Raps, Dominik, 81547 Munich (DE); Zikmund, Pavel, 61300 Brno (CZ)
(74) Representative: Flügel Preissner Kastel Schober

(57) **Abstract**

A device 10 for testing the effect of impacts on a test object 22 exposed to a fluid flow 89 in wind tunnel apparatus 26 is described. Also a testing method for testing the effect of impact is provided. The device 10 uses pressurized fluid to accelerate an insect 14, insect model 16 or ice crystal 17 up to an air speed inside the wind tunnel apparatus 26 and guides the insect 14, insect model 16 or ice crystal 17 to a desired target area 23 on the test object 22.

## Description

The invention relates to an impact testing device for testing insect, insect model and/or ice crystal impacts and/or contamination on a test object in wind tunnel experiments. Further, the invention relates to a wind tunnel apparatus comprising such an impact testing device. Still further, the invention relates to a test method for testing impacts and/or contamination of insect, insect models and/or ice crystals.

An insect dispensing device for discharging insects from a moving vehicle is disclosed in US 5,148,989.

Wind tunnels used in flow property measurements of miscellaneous test objects are widely known. In known contamination measurements usually insects or insect models are accelerated in a wind tunnel up to a velocity that reaches maximum 70% of the air speed in the wind tunnel. Testing of contamination of test objects in wind tunnels often lacks accuracy of the trajectories, so that the contaminat (e.g. fruit fly) may miss the test object entirely.

It is an object of the invention to improve contamination and impact experiments, especially in a wind tunnel.

For achieving this and further objects, the invention proposes an impact testing device having the features as defined in claim 1. According to another aspect of the invention, a wind tunnel apparatus equipped with an impact testing device is proposed. According to still another aspect of the invention, a test method is proposed.

According to the invention, operation of impact and contamination experiments with insects, insect models and/or ice crystals, especially in a (small scale and/or cryogenic) wind tunnel is achieved. Impact and contamination experiments are used for improving existing materials/surfaces and developing new materials/surfaces for laminar flow technology. These experiments allow to compare different surfaces and evaluate their properties.

Advantageous embodiments of the invention are subject matter of the dependent claims.

The invention provides, according to a first aspect thereof, an impact testing device for testing contamination of a test object or impacts onto the test objects in wind tunnel experiments: at least one insect, insect model and/or ice crystal is supplied by a supply means; the insect, insect model and/or ice crystal is accelerated by an acceleration means and guided by a guiding means for directing the accelerated insect, insect model and/or ice crystal onto the test object. The impact testing device accelerates and also directs the insect, insect model and/or ice crystal on a predefined or desired trajectory.

Preferably, the device is designed in a way that it does not disturb the laminar flow in the wind tunnel when inserted therein.

The testing device allows operation of impact and/or contamination experiments in realistic conditions. For example, the speed of the insect, insect model and/or ice crystal is nearly equal to the speed of the air and the insect, insect model and/or ice crystal impacts onto the test object with essentially no rotation.

In a further embodiment, the acceleration means comprises an elongated acceleration channel and a pressure fluid supply means for supplying the acceleration channel with pressurized fluid. The pressure fluid supply means comprises an inlet to be connected to a pressurized gas source. The acceleration means can comprise a control means for controlling a fluid flow of the pressurized fluid through the acceleration channel. Also, a controllable valve for a controlled supply of pressurized fluid to the acceleration channel can be provided.

In a further embodiment, the supply means comprises a feeding channel with a first end configured to receive the insect, insect model and/or ice crystal and a second end communicating with the acceleration channel for transporting the insect, insect model and/or ice crystal into the acceleration channel. The insect, insect model and/or ice crystal can thus be directed to the acceleration channel without blockage. The ice crystals are stored in a cryogenic supply before being received by the first end.

In a further embodiment, the supply means comprises:
a pushing means for pushing insects, insect models and/or ice crystals through the feeding channel in direction towards the acceleration channel and/or
a suction means for sucking the insects, insect models and/or ice crystals through the feeding channel toward the acceleration channel. The velocity and/or the frequency by which the insects, insect models and/or ice crystals enter the acceleration channel can thus be controlled.

In a further embodiment, the supply means, the acceleration means and/or the guiding means can be provided with a transparent wall section for observing transportation of the insect or the insect model in the device.

The device can be provided with a fixation means for mounting the impact testing device in a wind tunnel apparatus. The device is mounted into the wind tunnel in a beneficial way, so that the cross section area is minimized and accurate directing of the insects, insect models and/or ice crystals in the wind tunnel is achieved.

In a further embodiment, the device comprises a housing wherein at least a part of the outer periphery of the housing has an aerodynamic shape, preferrably a streamlined contour for enabling a laminar flow of air along the housing.

According to a further aspect, the invention provides a wind tunnel apparatus comprising a test section to receive a test object to be exposed to a fluid flow, and the impact testing device, according to any of the preceding aspects, for testing impacts and/or contamination of insect, insect models and/or ice crystals . Preferably, the device is mounted into the wind tunnel in a beneficial way by designing an aerodynamic shape and minimizing the cross section area.

In a further embodiment the test object is a flat plate. Shooting onto a flat plate has the advantage that it is possible to repeat experiments with the same conditions especially regarding the angle of impact.

According to a further aspect, the invention provides a test method for testing impacts and/or contamination of insects, insect models and/or ice crystals in a wind tunnel, wherein an impact testing device according to any of the aspects of the invention and/or a wind tunnel apparatus as described before is used, comprising: providing a test object in the test section of a wind tunnel apparatus; and aimed shooting of at least one insect, insect model and/or ice crystal onto the test object by operating the impact testing device.

A further embodiment of the test method comprises: a) intermittently operating the testing device in order to shoot single insects, insect models and/or ice crystals onto the test object or b) continuous operating the testing device in order to provide a series of of insect, insect models and/or ice crystal shots.

Intermittent operation of the testing device advantageously provides improved evaluation of the impact mechanism, spreading of the impacts and/or adhesion of the insect, insect model and/or ice crystal onto the test object.

On the other hand, continuous operation of the testing device advantageously provides multiple impacts onto the same spot of the test object during a comparatively short period of time.

In a preferred embodiment the insect velocity is set to a velocity essentially equal to the air flow velocity in the wind tunnel, especially nearly equal to the air flow velocity in the test section, e.g. approximately 95% of the air flow velocity. In addition, the accuracy of the target to be hit on the test object can be significantly increased.

A further embodiment of the test method comprises: accelerating the of insect, insect model and/or ice crystal to a calibrated velocity and/or to a velocity above about 40 m/s, particularly above about 80 m/s. In a test method for aerospace applications the insects or insect models are preferably accelerated above about 80 m/s. If mainly ice crystals are used in the test method the ice crystals are preferrably accelerated up to a calibrated velocity above about 80 m/s.

A further embodiment of the test method comprises: observing and/or measuring the insect, insect model and/or ice crystal shot by means of a high speed camera, and/or measuring the impact velocity of the insect, insect model and/or ice crystal.

According to a further embodiment, investigation of the aerodynamic influence of contamination and/or impact is provided and the wind tunnel is advandageously equipped with a sensitive balance for aerodynamic forces measurement.

In a further embodiment of the test method at least one drosophila melanogaster is used as insect to be shot. In a further embodiment of the test method ice crystals are used, e.g. of a size about of 0.1 mm to 2 mm.

The impact testing device, the wind tunnel and the test method are advantageous for development of new materials/surfaces for laminar flow technology which are more resistant against contamination and/or impact than former materials/surfaces.

With regard to the impact testing device the fixation means preferably comprises a mounting tube. The mounting tube can comprise at least one upper lid and/or at least one lower lid. The feeding channel comprises a front beam, a rear beam and two side beams, and preferably at least two side plates, which can be held together by an upper lid and/or lower lid. Preferably, the at least two side plates are made of a transparent material, particularly polycarbonate. The pushing means can be formed by a loading rod preferably made of a transparent material, particularly polycarbonate. The loading rod communicates with the acceleration channel and comprises at least one through hole. The through hole can be arranged at an end portion of the loading rod. Preferably, the feeding channel further comprises a first aerodynamic cover element arranged at a lower portion thereof for preserving a laminar fluid flow in a wind tunnel apparatus.

Preferably, the control means comprises a solenoid valve and allows the fluid flow of the pressurized fluid through the acceleration channel to flow intermittently or continuously. The control means is mountable to the feeding channel and is connectable to the acceleration channel by an arcuately formed fluid guide having a tubular shape. Preferably, the arcuately formed fluid guide is made of a metal, particularly steel or aluminium. Preferably, the control means comprises a second aerodynamic cover element for preserving a laminar fluid flow in a wind tunnel apparatus.

The guiding means comprises a tubular section, preferably having a diameter of about the size of the insect, insect model or ice crystal, e.g. approximately 2.5 mm to 7.5 mm. For small wind tunnels the guiding means preferably comprises a tubular section having a length of approximately 200 to 500 mm. The guiding means further comprises a third aerodynamic cover element for preserving a laminar fluid flow in a wind tunnel apparatus. A pressurized gas source provides pressurized air or pressurized nitrogen. The pressurized gas source can be a gas pump, gas compressor or gas bottle.

The test section comprises of the wind tunnel apparatus comprises at least one transparent wall. Preferably, the test object is rotatable around an axis orthogonal to the fluid flow. In a further embodiment, the wind tunnel is a small wind tunnel having a size of preferably about 600 cm x 200 cm and a test section size of about 150 mm to 100 mm, which corresponds to a ratio of 9:1 compared to large scale wind tunnels. Testing of impact and/or contamination of insects, insect models and/or ice crystals in a small scale wind tunnel decreases testing cost due to significantly lower operation costs. In addition, due to the excellent access of measurement devices (e.g. particle image velocimetry (PIV), high speed camera) it is possible to assess the contamination mechanism at a microscopic scale.

The wind tunnel apparatus further comprises a mounting element for mounting the impact testing device. The mounting element is preferrably arranged before the test section in direction of the fluid flow and has an annularly formed shape.

The wind tunnel apparatus further comprises a viewing section arranged before the test section in direction of the fluid flow. The viewing section can comprise at least one transparent wall. Preferably, the impact testing device is mounted to the annularly formed mounting element via the mounting tube.

The impact testing device is arranged in the viewing section. Preferably, the acceleration channel of the impact testing device forms an acute angle with the direction of the fluid flow, particularly the acceleration channel is parallel to the direction of the fluid flow.

Optionally, the wind tunnel apparatus can comprise a high speed camera and/or an aerodynamic force balance.

The method preferably further comprises the additional step of providing an aerodynamic force balance. Preferably, the test method further comprises the additional step of exposing the test object to a fluid flow. Preferably, the test object is rotated about an axis orthogonal to the fluid flow.

Further embodiments of the impact device, wind tunnel apparatus and test method can comprise all or a combination of the above mentioned features of the embodiments.

Exemplary embodiments of the invention are now explained with reference to the accompanying drawings. Therein:
- Fig. 1: shows an isometric view of an impact testing device according to a preferred embodiment of the invention, wherein a mounting tube and a part of a third aerodynamic cover element is removed to show inner elements of the device;
- Fig. 2: shows a side view of the device according to a first embodiment;
- Fig. 3: shows a top view of the device according to a first embodiment;
- Fig. 4: shows a side view of the device according to a second embodiment;
- Fig. 5: shows a side view of a wind tunnel apparatus according to a preferred embodiment;
- Fig. 6: shows a top view of the wind tunnel apparatus according to a preferred embodiment where for sake of clarity a control unit and a pressurized gas source are omitted; and
- Fig. 7: shows a graph illustrating a calibration curve for the device.

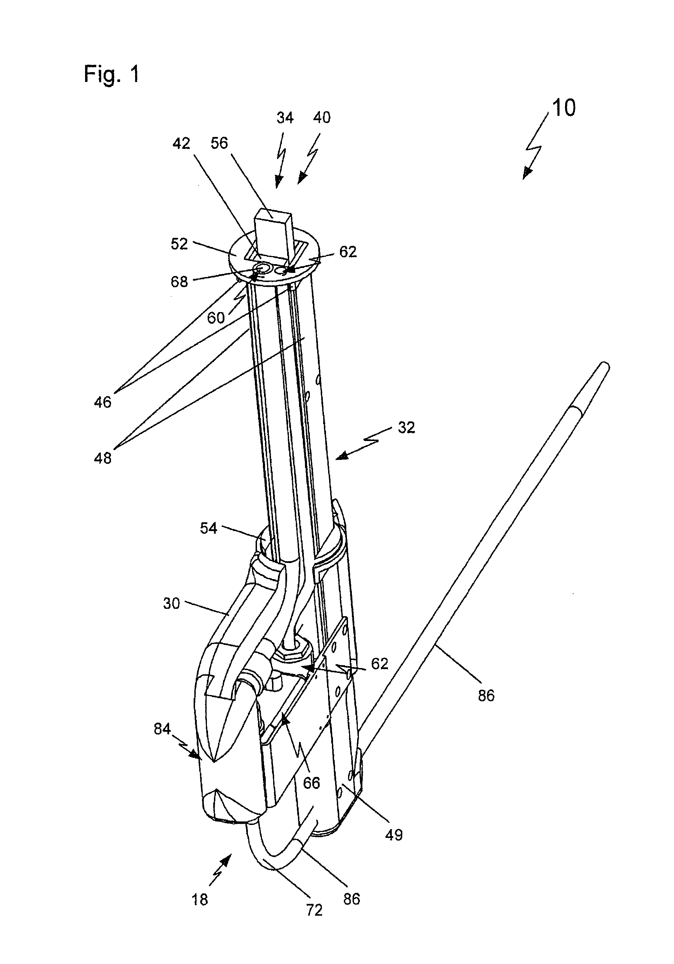

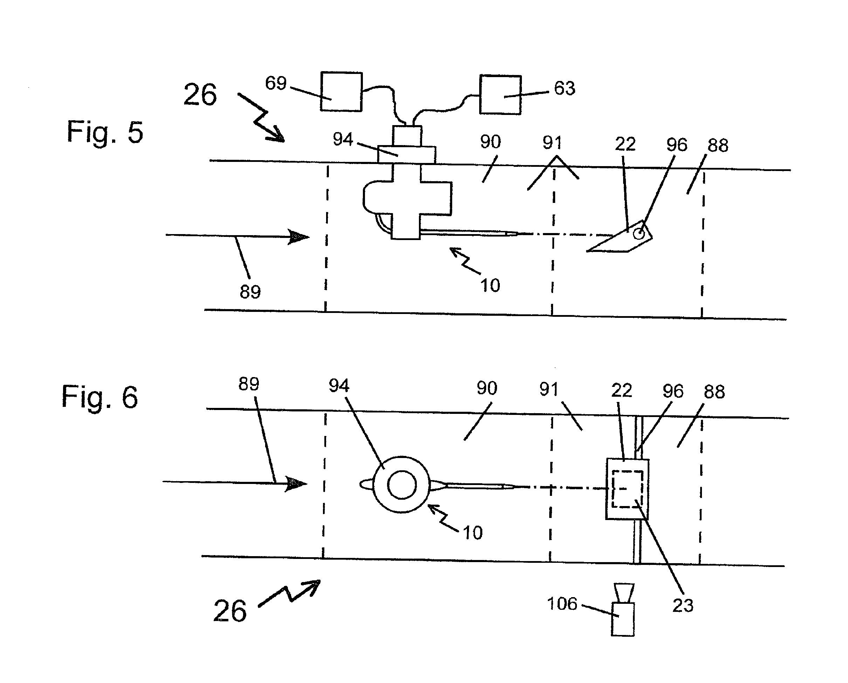

Referring to Figs. 1 to 3 an impact testing device 10 comprises a supply means 12 for supplying at least one of an insect 14, an insect model 16 and/or an ice crystal 17; an acceleration means 18 for accelerating the insect 14, insect model 16 or ice crystal 17; a guiding means 20 for directing the accelerated insect 14, insect model 16 or ice crystal 17 onto a test object 22 (Figs. 5 and 6); a fixation means 24 for mounting the impact testing device 10 in a wind tunnel apparatus 26 (Figs. 5 and 6); and a housing 28 wherein at least a part of the outer periphery of the housing 28 has a streamlined contour 30 for enabling a laminar flow of air along the housing 28.

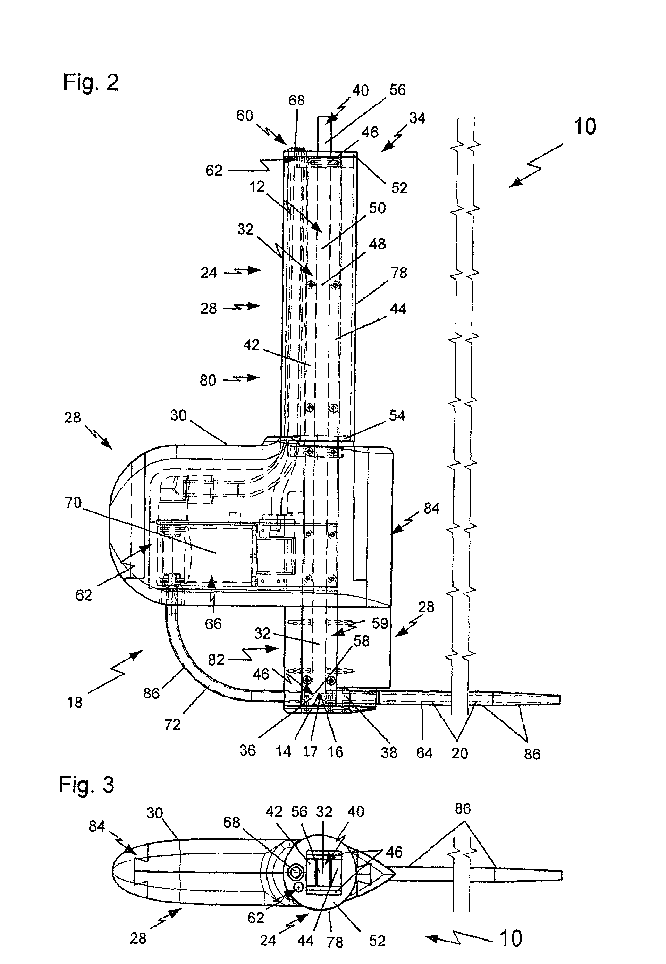

According to a first embodiment as shown in Fig. 2, the supply means 12 comprises a feeding channel 32 with a first end 34 and a second end 36. The first end 34 is configured to receive the insect 14, insect model 16 or ice crystal 17 and the second end 36 communicates with an acceleration channel 38. The feeding channel 32 allows transporting of the insect 14, insect model 16 or ice crystal 17 into the acceleration channel 38. The supply means 12 further comprises a pushing means 40 for pushing insects 14, insect models 16 or ice crystals 17 through the feeding channel 32 in direction towards the acceleration channel 38.

The feeding channel 32 comprises at least one front beam 42, at least one rear beam 44, at least two side beams 46 and at least two side plates 48. The beams 42, 44, 46 are made of metal, particularly aluminium or steel. The side plates 48 are made of a transparent material, particularly polycarbonate. As seen in Figs. 2 and 3 the beams 42, 44, 46 and the side plates 48 are arranged to form a rectangular cavity 50 which allows insects 14, insect models 16 or ice crystals 17 as well as the pushing means 40 to pass to the acceleration channel 38. The side plates 48 form a transpartent wall section 49 at the acceleration channel 38 for viewing the inserted insect 14, insect model 16 or ice crystal 17 within the feeding channel 32. The beams 42, 44, 46 and side plates 48 are held together by an upper lid 52 and a lower lid 54.

The pushing means 40 is formed as a loading rod 56 made of a transparent material, particularly polycarbonate. The loading rod 56 comprises a through-hole 58 for storing insects 14, insect models 16 or ice crystals 17 therein. The through-hole 58 is arranged at an end portion 59 of the loading rod 56 and is formed to communicate with the acceleration channel 38 when the rod is inserted in the feeding channel 32. Proper alignment of the through hole 58 can be assured by looking through the transparent wall section 49 and the transparent loading rod 56.

The acceleration means 18 comprises the acceleration channel 38 which is elongated and a pressure fluid supply means 60 for supplying the acceleration channel 38 with pressurized fluid; a control means 62 for controlling a fluid flow of the pressurized fluid through the acceleration channel 38. The elongated acceleration channel 38 is formed by a tubular section 64 with a diameter between 2.5 mm and 7.5 mm. The control means 62 comprises a controllable valve 66 for a controlled supply of pressurized fluid to the acceleration channel 38 and a control unit 63 configured to control the controllable valve 66. According to the first embodiment, as seen in Figs. 1 to 3, the pressure fluid supply means 60 comprises an inlet 68 to be connected to a pressurized gas source 69. The pressurized gas source 69 provides pressurized air or pressurized nitrogen. For example the pressurized gas source 69 comprises a gas pump, a gas compressor and/or a gas bottle.

The control means 62 comprises a solenoid valve 70 and an arcuately formed fluid guide 72 made of metal, particularly aluminium or steel. The control means 62 allows the fluid flow of the pressurized fluid through the acceleration channel 38 to flow intermittently or continuously. The control means 62 is mountable to the feeding channel 32 and fixed thereon. The arcuately formed fluid guide 72 is connectable to the control means 62 and the acceleration channel 38 so as to guide the fluid flow of the pressurized fluid from the control means 62 to the acceleration channel 38. The acceleration of the insect 14, insect model 16 or ice crystal 17 ends when the thrust caused by the pressurized fluid equals the drag force. Since different insects 14, insect models 16 or ice crystals 17 of a certain type are nearly equal in their mechanical properties such as size, mass and friction a defined input pressure at the inlet 68 allows for a nearly equal impact velocity of the different insects 14, insect models 16 or ice crystals 17 on the test object 22. Particularly it is now possible for the insect 14, insect model 16 or ice crystal 17 to reach the same speed as the air speed in the wind tunnel apparatus 26. This enhances reproducibility and reliability of impact or contamination experiments.

The guiding means 20 comprises a tubular section 74 for guiding the accelerated insect 14, insect model 16 or ice crystal 17. The guiding means 20 is adjacent to the acceleration channel 38 and forces the insect 14, insect model 16 or ice crystal 17 on a desired trajectory 76 (Figs. 5 and 6) after being accelerated by the pressurized fluid in the acceleration channel 38. After the acceleration stops the insect 14, insect model 16 or ice crystal 17 is moving in a ballistic trajectory until impact on the test object 22. Since these trajectories are well defined different target areas 23 of the test object can be targeted.

The fixation means 24 comprises a mounting tube 78 disposed between the upper lid 52 and lower lid 54. The mounting tube 78 enables the impact testing device 10 to be fixed to the wind tunnel apparatus 26.

Referring to Figs. 2 and 3, the housing 28 comprises four aerodynamic cover elements 80, 82, 84, 86. The first aerodynamic cover element 80 is formed by the mounting tube 78. The second aerodynamic cover element 82 is disposed at the lower end of the feeding channel 32 and made from metal, particularly aluminium or steel. The third aerodynamic cover element 84 is arranged between the first aerodynamic cover element 80 and the second aerodynamic cover element 82 and covers part of the control means 62. The third aerodynamic cover element 84 is made of a synthetic resin, particularly polyamide. The fourth aerodynamic cover element 86 is disposed around the arcuately formed fluid guide 72 and the tubular section 74 of the guiding means 20 and made of metal, particularly aluminium or steel. The first 80, second 82, third 84 and fourth 86 aerodynamic cover elements preserve a laminar fluid flow in the wind tunnel apparatus 26.

The wind tunnel apparatus 26, as illustrated in Figs. 5 and 6, comprises a test section 88 to receive the test object 22 with different target areas 23 to be exposed to a fluid flow 89; an impact testing device 10 according to a preferred embodiment for testing impact of the test object 22; a viewing section 90 arranged before the test section 88 in direction of the fluid flow; a high-speed camera 92; and a mounting element 94 for mounting the impact testing device 10 to the wind tunnel apparatus 26. The wind tunnel apparatus 26 is configured to provide a continuous or intermittent fluid flow 89. The test object 22 is arranged in the test section 88 of the wind tunnel apparatus 26 and rotatable about a rotational axis 96. The impact testing device 10 is arranged in the viewing section 90 and mounted to the wind tunnel apparatus 26 via the mounting tube 78 and the mounting element 94.

The mounting element 94 is arranged before the test section 88 in direction of the fluid flow and is formed annularly. The impact testing device 10 is mounted in the mounting element so that the acceleration channel 38 of the impact testing device 10 forms an acute angle with the direction of the fluid flow in the wind tunnel apparatus 26, particularly the acceleration channel 38 is parallel to the direction of the fluid flow in the wind tunnel apparatus 26.

The viewing section 90 comprises at least one transparent wall 91 to allow viewing of the impact testing device 10, particularly to view the loading and shooting process. The test section 88 comprises at least one transparent wall to view the test object 22 and the insect impacts thereon, particularly via the high-speed camera 92.

According to a preferred embodiment of the invention, a test method for testing impact and/or contamination of insects, insect models and/or ice crystals in a wind tunnel apparatus 26 comprises the steps of:
providing the test object 22 in the test section 88 of the wind tunnel apparatus 26; aimed shooting of at least one insect 14, insect model 16 or ice crystal 17 onto the test object 22; and observing the insect, insect model and/or ice crystal by a high-speed camera 92.

For shooting an insect 14, insect model 16 or ice crystal 17 out of the device 10 on the test object 22 in a specific target area 23 at least one insect 14, insect model 16 or ice crystal 17 needs to be inserted in the through hole 58 of the loading rod 56. The insect 14, insect model 16 or ice crystal 17 is then pushed through the feeding channel 32 until the through hole 58 communicates with the acceleration channel 38. The device 10 is aimed on the desired target area 23. The control means 62 is then used to expose the acceleration channel 38 to a continuous or intermittent flow of pressurized fluid. The fluid pressure generates an accelerating force and the insect 14, insect model 16 or ice crystal 17 is accelerated until the accelerating force and force due to air friction are in balance. Then the acceleration stops and the insect 14, insect model 16 or ice crystal 17 is forced by the guiding means on the desired trajectory 76. The pressure is set in such a way that the insect 14, insect model 16 or ice crystal 17 reaches the same velocity as the air flow inside the wind tunnel apparatus 26. After leaving the device 10 the insect 14, insect model 16 or ice crystal 17 follows a ballistic movement till impact in the target area 23. The impact and effects thereof are observed via the high speed camera 92.

A second embodiment of the impact testing device is described hereinafter as far as there are differences between the first embodiment and the second embodiment of the device.

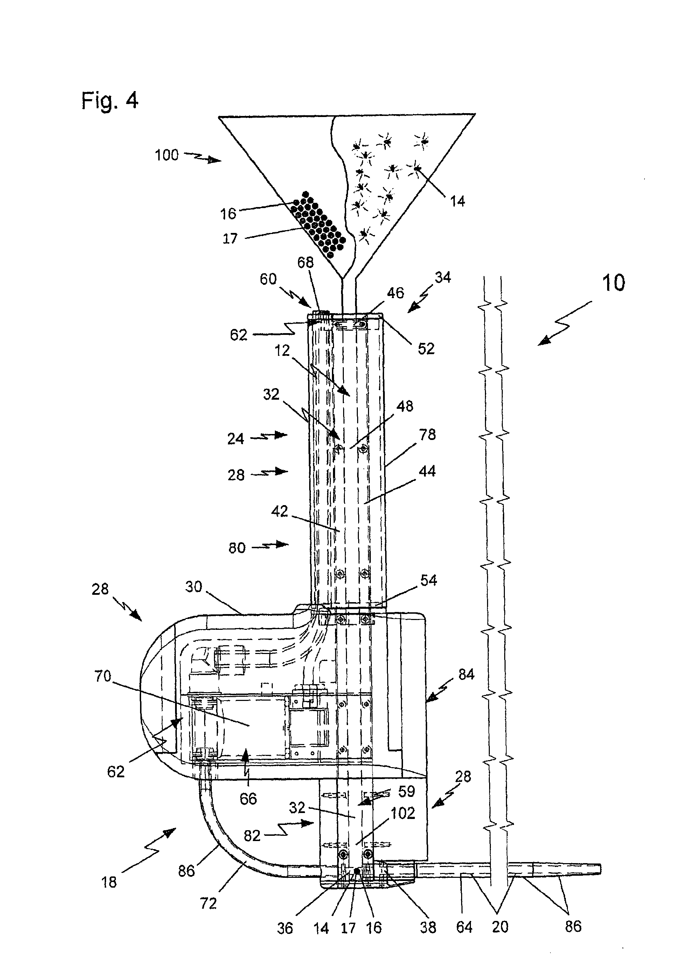

As seen in Fig. 4, according to a second embodiment, the supply means 12 comprises a funnel-shaped storage 100 filled with insects 14, insect models 16 and/or ice crystals connected to the feeding channel 32. The supply means 12 further comprises a suction means 102 for sucking the insects 14, insect models 16 or ice crystals 17 through the feeding channel 32 towards the acceleration channel 38. A continuous fluid flow from the inlet 68 through the control means 62 to the acceleration channel 38 generates an under-pressure in the feeding channel 32 when passing the lower end thereof. The under-pressure transports the insects 14, insect models 16 or ice crystals 17 from the funnel-shaped storage 100 via the feeding channel 32 to the acceleration channel 38 where they are accelerated by the pressurized fluid flow. This way, a continuous stream of insects 14, insect models 16 or ice crystals 17 within the wind tunnel apparatus 26 is possible.

The other parts, elements, portions and members of the impact testing device 10 are identical to the first embodiment thereof.

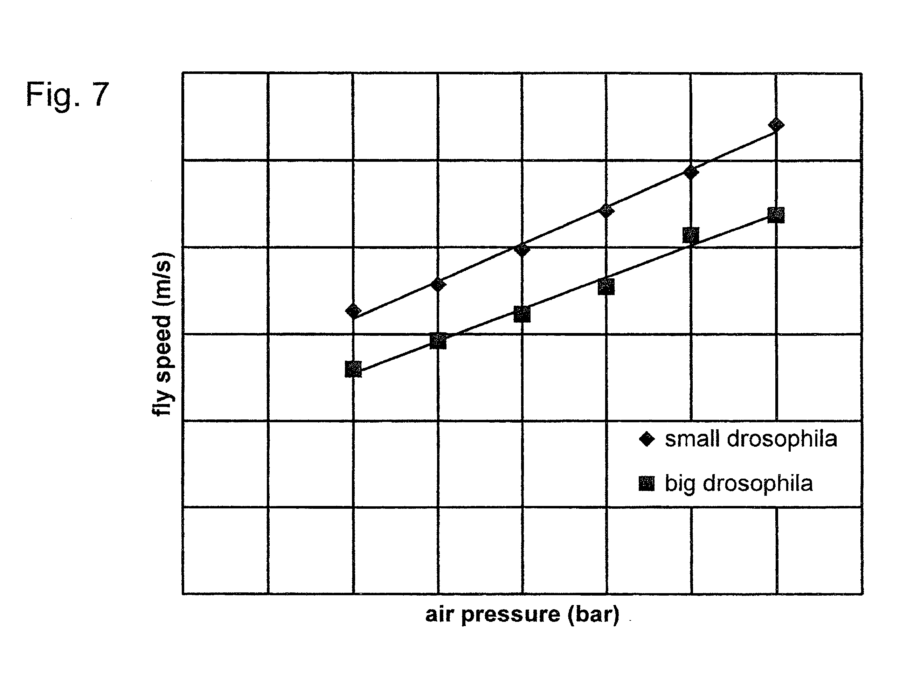

According to a second embodiment of the test method, an insect impact velocity can be calibrated so as to obtain a mapping between a preset pressure of a pressurized fluid and the insect impact velocity, as illustrated by the graph in Fig. 7. To achieve this object an insect 14, small and big drosophila melanogaster in this case, is repeatedly shot onto a test object 22 at different preset pressure values and the impact velocity is measured by a high speed camera 92 or other means. After the calibration the pressure being advantageous for reaching an impact velocity nearly equal to the air speed of the wind tunnel can be preset for the different types of insects 14 the calibration is made with. The impact velocity of the insect model or ice crystal can also be calibrated as shown in Fig. 7.

As a person skilled in the art can easily see various modifications to the invention are possible without leaving the scope thereof.

With regard to the impact testing device particularly, the supply means, the acceleration means, and/or the guiding means can be made of a transparent material for viewing the insect (model) feeding and shooting procedures; the housing can be formed by less than four aerodynamic cover elements or integrally; some aerodynamic cover elements can be omitted entirely if the laminar flow inside the wind tunnel apparatus is preserved; the impact device can be configured to shoot drosophila melanogaster; the impact device can be configured to shoot the insect or insect model with a velocity of at least about 40 m/s and especially above about 80 m/s.

With regard to the wind tunnel apparatus particularly, the fluid flow in the wind tunnel apparatus can be temperature and humidity controlled for simulating different altitudes, weather conditions or the like.

With regard to the test method particularly, the impact velocity calibration is independent of the insects, insect models and/or ice crystals used.

### List of reference signs:

- 10: impact testing device
- 12: supply means
- 14: insect
- 16: insect model
- 17: ice crystal
- 18: acceleration means
- 20: guiding means
- 22: test object
- 23: target area
- 24: fixation means
- 26: wind tunnel apparatus
- 28: housing
- 30: streamlined contour
- 32: feeding channel
- 34: first end
- 36: second end
- 38: acceleration channel
- 40: pushing means
- 42: front beam
- 44: rear beam
- 46: side beam
- 48: side plate
- 49: transparent wall section
- 50: cavity
- 52: upper lid
- 54: lower lid
- 56: loading rod
- 58: through hole
- 59: end portion
- 60: pressure fluid supply means
- 62: control means
- 63: control unit
- 64: tubular section
- 66: valve
- 68: inlet
- 69: pressurized gas source
- 70: solenoid valve
- 72: fluid guide
- 74: tubular section
- 76: trajectory
- 78: mounting tube
- 80: first aerodynamic cover element
- 82: second aerodynamic cover element
- 84: third aerodynamic cover element
- 86: fourth aerodynamic cover element
- 88: test section
- 89: fluid flow
- 90: viewing section
- 91: transparent wall
- 92: high speed camera
- 94: mounting element
- 96: rotational axis
- 100: storage
- 102: suction means

## Claims

1. Impact testing device (10) for testing contamination of a test object (22) or impacts onto the test object (22) in wind tunnel experiments, **characterized by**:
a supply means (12) for supplying at least one insect (14), insect model (16) and/or ice crystal (17);
an acceleration means (18) for accelerating the insect (14), insect model (16) and/or ice crystal (17); and
a guiding means (20) for directing the accelerated insect (14), insect model (16) and/or ice crystal (17) onto a test object (22).

2. Impact testing device (10) according to claim 1,
**characterized in that** the acceleration means (18) comprises an elongated acceleration channel (38) and a pressure fluid supply means (60) for supplying the acceleration channel (38) with pressurized fluid.

3. Impact testing device (10) according to claim 2 or 3,
**characterized in that** the supply means (12) comprises a feeding channel (32) with a first end (34) configured to receive insects (14), insect models (16) and/or ice crystals (17) and a second end (36) communicating with the acceleration channel (38) for transporting the insects (14), insect models (16) and/or ice crystals (17) into the acceleration channel (38).

4. Impact testing device (10) according to claim 3,
**characterized in that** the supply means (12) comprises:
a) a pushing means (40) for pushing insects (14), insect models (16) and/or ice crystals (17) through the feeding channel (32) in direction towards the acceleration channel (38) and/or
b) a suction means (102) for sucking the insects (14), insect models (16) and/or ice crystals (17) through the feeding channel (32) toward the accerlation channel (38).

5. Impact testing device (10) according to any of the preceding claims, **Characterized in that** the supply means (12), the acceleration means (18) and/or the guiding means (20) can be provided with a transparent wall section for observing transportation of the insect (14), insect model (16) or ice crystal (17) in the device.

6. Impact testing device (10) according to any of the preceding claims, **characterized by** a housing (28) wherein at least a part of the outer periphery of the housing (28) has a streamlined contour (30) for enabling a laminar flow of air along the housing (28).

7. Wind tunnel apparatus (26) comprising a test section (88) to receive a test object (22) to be exposed to a fluid flow (89), **characterized by** an impact testing device (10) according to any of the preceding claims for testing impact of the test object (22).

8. Test method for testing impacts and/or contamination of insects (14), insect models (16) and/or ice crystals (17) in a wind tunnel, **characterized by** use of an impact testing device (10) according to any of the claims 1 to 6 and/or a wind tunnel apparatus (26) according to claim 7 comprising:
providing a test object (22) in the test section (88) of a wind tunnel apparatus (26); and
aimed shooting of at least one insect (14), insect model (16) and/or ice crystal (17) onto the test object (22) by operating the impact testing device (10).

9. Test method according to claim 8,
**characterized by**
a) intermittently operating the testing device (10) in order to shoot single insects (14), insect models (16) and/or ice crystals (17) onto the test object (22) or
b) continuous operating the testing device (10) in order to provide a series of insect (14), insect model (16) and/or ice crystal (17) shots.

10. Test method according to claim 8 or 9,
**characterized by**
accelerating the insect (14), insect model (16) and/or ice crystal (17) to a velocity essentially equal to the air flow velocity in the wind tunnel apparatus (26).

11. Test method according to claim 8 to 10,
**characterized by**
accelerating the insect (14), insect model (16) and/or ice crystal (17) to
a) a calibrated velocity and/or
b) a velocity above about 40 m/s, particularly above about 80 m/s.

12. Test method according to any of the claims 8 to 11,
**characterized by**
a) observing and/or measuring the insect (14), insect model (16) and/or ice crystal (17) shot by means of a high speed camera (92), and/or
b) measuring the impact velocity of the insect (14), insect model (16) and/or ice crystal (17).

13. Test method according to any of the preceding claims,
**characterized by** use of at least one drosophila melanogaster as insect (14) to be shot.
